# EUROPÄISCHE PATENTSCHRIFT

(11) **EP 2 416 019 B1**
(45) Veröffentlichungstag und Bekanntmachung des Hinweises auf die Patenterteilung: **15.01.2020**
(21) Anmeldenummer: 11174502.2
(22) Anmeldetag: 19.07.2011
(51) Int. Cl.: F16B 5/06, A47B 77/08, F24C 15/10, F16B 5/00

(54) **BEFESTIGUNGSELEMENT FÜR DEN EINBAU EINES KOCHFELDES IN EINE ARBEITSPLATTE**
FIXING ELEMENT FOR INSTALLATION OF A HOTPLATE IN A WORK SURFACE
ÉLÉMENT DE FIXATION POUR L'INTÉGRATION D'UNE PLAQUE DE CUISSON DANS UN PLAN DE TRAVAIL

(30) Priorität: 03.08.2010 DE 102010038807
(43) Veröffentlichungstag der Anmeldung: 08.02.2012
(73) Patentinhaber: BSH Hausgeräte GmbH, 81739 München (DE)
(72) Erfinder: Schemmerer, Roman, 83349 Palling (DE); Weinbrenner, Konrad, 83368 St. Georgen (DE)

(56) Entgegenhaltungen:
- EP-A1- 1 515 092
- EP-A2- 0 108 916
- EP-A2- 0 859 092
- DE-B1- 2 345 446
- DE-B1- 2 545 039
- DE-U1- 7 820 319

## Beschreibung

Die Erfindung bezieht sich auf ein Befestigungselement für den Einbau eines Kochfeldes in eine Arbeitsplatte, welches Befestigungselement an einem der Einbauelemente (Kochfeld oder Arbeitsplatte) einen dort befestigten Federschenkel besitzt, der sich beim Zusammenfügen der Einbauelemente am jeweils anderen Einbauelement federnd verklemmt.

Bei einem bekannten Befestigungselement dieser Art (EP 2144009 A1) ist ein Kochfeld mit einer Glaskeramik-Kochmulde in einen Ausschnitt einer Küchen-Arbeitsplatte eingefügt und in diesem Ausschnitt gehalten mittels Einbaufedern mit an der Kochmulde befestigten Basisteilen und V-förmig hiervon frei ragenden Federschenkeln, die beim Einfügen der Kochmulde bzw. des Kochfeldes in den Arbeitsplatten-Ausschnitt komprimiert werden und sich in der vorgesehenen Endstellung an der Arbeitsplattenkante federnd verspannen oder verklemmen. Hierbei wird eine flüssigkeitsdichte Anlagekraft z.B. zwischen der Kochmulde und der Arbeitsplatten-Oberfläche und eventuell einer dazwischen liegenden Dichtung nur bewirkt durch das Gewicht des in die Arbeitsplatte eingefügten Einbauelements, vermindert unter ungünstigen Umständen, z.B. bei unebener Arbeitsplatten-Ausschnittskante, durch unerwünschte Verspannung / Verklemmung vor Erreichen der Einbau-Endstellung. Dies bedeutet, dass eine maximale Andrückkraft oder Anlagekraft zwischen Kochfeld und Arbeitsplatte nicht sichergestellt ist.

DE 25 45 039 B1 offenbart eine Einrichtung zum lösbaren Befestigen eines Geräteeinsatzes in der Einbauöffnung eines Unterbaues mit einem mit Krallen versehenen Spannteil und einem im Spannteil drehbar eingespannten Schraubenbolzen zum Festziehen, wobei der Schraubenbolzen ein mit Verankerungsmitteln versehenes Klemmteil trägt, das aus zwei etwa parallel zueinander angeordneten Schenkeln, die im rechten Winkel zu dem mit Gewinde versehenen kürzeren Schenkel stehen, besteht und die sich an der Randleiste des Geräteeinsatzes abstützen, wobei einer der Schenkel eine Raste zum Einschnappen in den Aufnahmeausschnitt der Randleiste des Geräteeinsatzes aufweist, und wobei der eine Schenkel des Klemmteils eine den Spannteil gegen die Öffnung des Unterbaues spreizende, vorspringende Führung bildet und wobei der Spannschenkel durch die vorspringende Führung auslenkbar und unter Federspannung stehend ein Teil des kastenförmigen Spannteils bildet und das Spannteil gegenüber dem mit Krallen versehenen Spannschenkel einen Stütz- und Gleitwinkel, der bei der Montage an der Randleiste oder an dem Klemmteil entlanggleitet und sich im montierten Zustand an der Randleiste bzw. dem Klemmteil abstützt, aufweist.

EP 0 108 916 A2 offenbart eine Kochmulde mit einer Kochstellen aufweisenden Kochplatte, insbesondere Glaskeramikplatte, mit Heizkörpern für die Kochstellen sowie mit einem rahmenartigen Träger für die Aufnahme der Kochplatte und der Heizkörper und wenigstens einem Stütz- und Druckelement für die Heizkörper, wobei an einem eigensteifen, vorzugsweise als Druckgussteil ausgebildeten Träger innerhalb dessen Trägerbegrenzung sowohl Halteelemente für die Kochplatte als auch die Stütz- und Druckelemente für die Heizkörper sowie Halteelemente für Energieversorgungseinrichtungen einstückig angeformt sind.

DE 23 45 446 B1 offenbart Vorrichtung zum Befestigen von Einbauteilen in Einbauöffnungen einer Tragplatte oder -wand, wobei die Einbauteile mit einer Außenkante, äußeren Vorsprüngen oder dgl. in Einbaurichtung an der Tragplatte oder - wand anliegen, bestehend aus einem mit dem Einbauteil verbundenen, sich im wesentlichen in Einbaurichtung erstreckenden Träger sowie einem Klemmarm, der im Bereich des in Einbaurichtung hinteren Endes des Trägers um eine parallel zur zugeordneten Kante der Einbauöffnung gelegene Achse schwenkbar am Träger zwischen einer Offenstellung und einer Klemmstellung gehalten und durch wenigstens eine zwischen Träger und Klemmarm angeordnete Feder beaufschlagt ist und in Klemmstellung die Tragplatte oder -wand ergreift, beispielsweise hintergreift, wobei die Vorspannung der Feder bei der der Offenstellung und der Klemmstellung entsprechenden Schwenklage des Klemmarmes geringer als bei den dazwischenliegenden Schwenklagen ist, und wobei am Träger ein Schaltarm bewegbar gehalten ist, der durch den in seiner Offenstellung befindlichen Klemmarm in einer über den dem Einbauteil zugekehrten Rand der Einbauöffnung vorstehenden Stellung haltbar ist und der beim Einführen der Befestigungsvorrichtung in die Einbauöffnung unter gleichzeitiger Anlage am besagten Einbauöffnungsrand und dabei erfolgender Schwenkung den Klemmarm in die Klemmstellung überführt, in welcher er die Tragplatte oder -wand ergreift.

EP 1 515 092 A1 offenbart eine Kochmulde, deren Oberteil im Wesentlichen durch ein Kochfeld, insbesondere eine Glaskeramikplatte, und deren Boden im Wesentlichen durch ein Unterteil, das die Einbaukochmulde nach unten abschließt, gebildet sind, wobei das Kochfeld und das Unterteil mittels eines im Wesentlichen die Seitenwände der Einbaukochmulde bildenden Rahmens miteinander verbunden sind, und dass der Rahmen zweiteilig ausgebildet ist und einen Deckrahmen und ein Rahmenseitenteil aufweist, wobei der Deckrahmen den Übergangsbereich zwischen einer Arbeitsplatte und der darin einbaubaren Einbaukochmulde bezogen auf deren Einbaulage nach oben abdeckt und die lichten Innenabmessungen des Deckrahmens im Wesentlichen den äußersten Außenabmessungen des Unterteils, bezogen auf deren im Wesentlichen parallel zu dem Kochfeld verlaufenden Ausdehnungsrichtungen, entsprechen, und das Kochfeld und das Unterteil mittels des Rahmenseitenteils miteinander verbunden sind, wobei das Rahmenseitenteil einen ersten Schenkel aufweist und über ein an dem ersten Schenkel angeordnetes erstes Befestigungsmittel mit dem Deckrahmen und über ein zweites Befestigungsmittel mit dem Kochfeld verbunden ist, und das erste und/oder das zweite Befestigungsmittel ein Kleber ist, und wobei das Rahmenseitenteil einen zweiten Schenkel aufweist, an dem das zweite Befestigungsmittel angeordnet ist und dass der erste und/oder zweite Schenkel des Rahmenseitenteils eine weitere Vertiefung zur Aufnahme des Klebers aufweist.

DE 7820 319 U1 offenbart Vorrichtung zum Befestigen eines Einbauelements wie einer Einbauspüle, einer Herdmulde oder dgl. in einem Ausschnitt einer Platte, mit einem auf der Unterseite des Einbauelements in dessen Randbereich befestigbaren, nach unten ragenden Träger für eine vertikale Schraubspindel, welche eine durch Drehen der Schraubspindel vertikal verschiebbare, vom Einbauelement seitlich wegweisende Kralle trägt, sowie mit einem vom Träger gehaltenen Vorsprung zum Abspreizen der Kralle bei deren vertikalem Verschieben, wobei der mit dem Vorsprung zusammenwirkende Teil der Kralle vor deren Abspreizen über dem Vorsprung liegt sowie zum Befestigen des Einbauelements durch die Schraubspindel absenkbar und dabei das freie Ende der Kralle abspreizbar ist.

Um eine zuletzt genannte Andrückkraft zu erhalten, ist es bekannt, Einbaufedern an den Ausschnittskanten der Arbeitsplatte zu befestigen und beim Einfügen des Kochfeldes in den Arbeitsplatten-Ausschnitt die Druckstellen dieser Einbaufedern in am Kantenumfang der Kochmulde angebrachte schräge Rastflächen mit Druckkraft / Anzugskraft nach unten einzudrücken. Dies setzt voraus, dass die schrägen Rastflächen entweder in aufwändiger Weise am gesamten Umfang der Kochmulde oder aber nur punktuell vorhanden sind, was im letztgenannten Fall bedeutet, dass die Kochmulde / das Kochfeld punktgenau abgemessen in den Arbeitsplatten-Ausschnitt eingesetzt werden muss. Die vorgenannten schrägen Rastflächen sind üblicherweise Bestandteile von metallischen Randleisten z.B. des Kochfeld-Trägers.

Der vorliegenden Erfindung liegt die Aufgabe zugrunde, ein Befestigungselement der eingangs genannten Art so zu gestalten, dass es - bzw. dass jedes von üblicherweise mehreren am Umfang des Kochfeldträgers angeordneten Befestigungselementen - ohne aufwändige konstruktive Vorkehrungen an beiden zusammenzufügenden Einbauelementen (Kochfeld und Arbeitsplatte) eine sichere Fixierung und lagegenaue Einfüge-Zentrierung und insbesondere eine exakt vorbestimmbare Anlage- bzw. Anzugskraft ermöglicht.

Die Aufgabe wird durch die kennzeichnenden Merkmale des Anspruchs 1 gelöst.

Diese Aufgabe wird bei einem Befestigungselement der eingangs genannten Art dadurch gelöst, dass an der Einbaufeder ein zweischenkeliges Klemmelement anschlagsbegrenzt verschiebbar und um eine virtuelle Schwenkachse schwenkbar geführt ist, welches Klemmelement an einem der beiden Elementeschenkel einen an dem jeweils anderen Einbauelement arretierbaren Halteansatz und am anderen Elementeschenkel Klemmorgane, z.B. in Form von Krallen besitzt, wobei beim Zusammenfügen der Einbauelemente die Druckstelle der Einbaufeder vom erstgenannten Elementeschenkel zum zweitgenannten Elementeschenkel des Klemmelements verschiebbar ist. Erfindungsgemäße Befestigungselemente brauchen als autarke Baueinheiten an nur einem der Einbauelemente, vorzugsweise am Kochfeld bzw. dessen Träger montiert werden und sind ohne unterstützende Bauelemente oder sonstige Einrichtungen am anderen Einbauelement voll funktionsfähig. Aufgrund der relativen Verschiebbarkeit des Klemmelements und damit seiner Klemmorgane, z.B. Krallen, entlang der Begrenzungskante dieses anderen Einbauelements, vorzugsweise der Ausschnittkante der Arbeitsplatte und entlang der Druckstelle der das Klemmelement tragenden Einbaufeder wird erst dann die maximale Klemmkraft wirksam, wenn die beiden Einbauelemente voll und korrekt zusammengefügt sind. Obwohl es bevorzugt wird, das Befestigungselement so anzuordnen, dass der Halteansatz des Klemmelements während dem Einfügevorgang sich an der Oberkante der Arbeitsplatte abstützt und die Einbaufeder gegenüber dem Klemmelement nach unten bewegt wird, kann alternativ auch vorgesehen sein, das Befestigungselement um 180° Grad gedreht einzubauen mit dem Halteelement in der Einfügebahn des einzufügenden Kochfeldes.

Das Klemmelement weist zudem eine die Schwenkachse darstellende, mit einem Gleitansatz der Einbaufeder gleitend zusammenwirkende Rastkurve auf, mit der das Klemmelement mit einer Hubbewegung gegenüber der Verschiebebahn von dem einen zum anderen Elementeschenkel mit einander entgegengesetzten Kräften auf schiefen Ebenen verschiebbar ist. Beim Einfügen der Kochfeld-Einheit in den Ausschnitt der Arbeitsplatte läuft die Einbaufeder mit ihrem Gleitansatz auf der schrägen Gleitbahn der rundbuckeligen oder auch spitzbuckeligen Rastkurve auf, verbunden mit einem Kippen des Klemmelements um die virtuelle Schwenkachse und einer Druckverlagerung vom oberen zum unteren Elementeschenkel und einer Annäherung oder Kontaktaufnahme seiner Klemmorgane an bzw. mit der Ausschnittkante der Arbeitsplatte. Danach wirkt auf die eingefügte Baueinheit beim Gleiten auf der entgegengesetzten schrägen Gleitbahn des Gleitbuckels eine Kraft auf der schiefen Ebene, die diese Baueinheit nahezu selbsttätig in die korrekte Einfügeposition zwinat und ein endgültiges Verklemmen der Klemmorgane bewirkt. Umgekehrt wird bei der Demontage des Kochfeldes nach dem Erreichen der Buckelspitze eine entgegengesetzte Kraft wirksam, die ein weiteres Abheben der Kochmulde von der Arbeitsplatte erleichtert.

Gemäß einer vorteilhaften Weiterbildung der Erfindung sind die Elementeschenkel, vorzugsweise die sie bildenden Schenkelstege winkelig gegeneinander geneigt. Durch die Einbaufeder wird während des Einfügevorganges zuerst der z.B. den Halteansatz aufweisende Elementeschenkel gegen die Ausschnittkante der Arbeitsplatte gedrückt und der Halteansatz in die korrekte Halteposition auf der Arbeitsplatte gebracht, der andere z.B. die Klemmorgane aufweisende Elementeschenkel dagegen von der Ausschnittkante abgehalten. Nachfolgend wird die Druckstelle auf den hierzu winkelig geneigten Elementeschenkel verlagert, verbunden mit einem Federdruck auf die Klemmorgane z.B. auf die Krallen, die somit in die z.B. hölzerne Ausschnittkante der Arbeitsplatte eingedrückt oder aber z.B. bei aus Steinmaterial bestehenden Arbeitsplatten fixierend angedrückt werden.

Erfindungsgemäß ist weiterhin vorgesehen, dass die Elementeschenkel des einstückigen Klemmelements durch einzelne frei ragende Schenkelstege gebildet sind. Vorzugsweise befindet sich zwischen den Schenkelstegen ein die Rastkurve aufweisender Kurvensteg. Die frei ragenden Schenkelstege ermöglichen durch ihre individuelle Federeigenschaft die Anbringung von weitgehend unabhängig voneinander agierenden Klemmorganen, was insbesondere bei unebenen Ausschnitt-Kantenflächen vorteilhaft ist. Insbesondere für den Einsatz der Befestigungselemente bei Steinarbeitsplatten ist es vorteilhaft, wenn nur der mittlere Kurvensteg Klemmorgane aufweist.

Gemäß einer weiteren Ausgestaltung der Erfindung ist vorgesehen, dass das Klemmelement an einem mit dem oder den Schenkelstegen und/oder mit dem Kurvensteg verbundenen Abschlußsteg den Halteansatz für dessen Halterung an einer Begrenzungskante des jeweiligen Einbauelements aufweist. Bevorzugt wird dieser Halteansatz bei Beginn des Einfügevorganges durch die Federkraft der Einbaufeder gegen die obere Kante des Arbeitsplattenausschnittes gedrückt und stützt sich dort an der Oberfläche der Arbeitsplatte ab, so dass eine Relativbewegung zwischen diesem fest gehaltenen Klemmelement und der Einbaufeder zusammen mit dem Kochfeld stattfinden kann.

Ferner kann erfindungsgemäß vorgesehen sein, dass die Einbaufeder einen entgegen der Verschieberichtung abgebogenen Ansatz besitzt, der als Anschlag für den Führungsansatz des Klemmelementes dienen kann. Dies ist insbesondere dann von Bedeutung, wenn das Befestigungselement aus zwei individuellen, montagemäßig zusammensteckbaren und auch wieder trennbaren Teilen, also der Einbaufeder und dem Klemmelement, besteht. Der Ansatz verhindert dann ein unerwünschtes Absacken des unteren Kochfeldträgers, wenn sich die Verbindung zwischen Kochfeld, z.B. Glaskeramikplatte, und Trägergehäuse mit Heizelementen löst.

Eine Lösbarkeit und einfache Montierbarkeit der beiden Teile des Befestigungselementes wird insbesondere dann begünstigt, wenn das Klemmelement einen die Einbaufeder in der Verschieberichtung U-förmig umgreifenden Führungsbügel aufweist.

Die Erfindung ist anhand des in der Zeichnung dargestellten Ausführungsbeispieles nachstehend erläutert.

Es zeigt:
- Figur 1: die perspektivische Darstellung eines Befestigungselementes als Einzelheit, bestehend aus einer Einbaufeder und einem Klemmelement;
- Figur 2: das Klemmelement gemäß Figur 1 als Einzelheit;
- Figur 3: vier aufeinander folgende Einfügesituationen der Einbauelemente (Kochfeld, Arbeitsplatte) anhand der Figuren 3.1 bis 3.4.

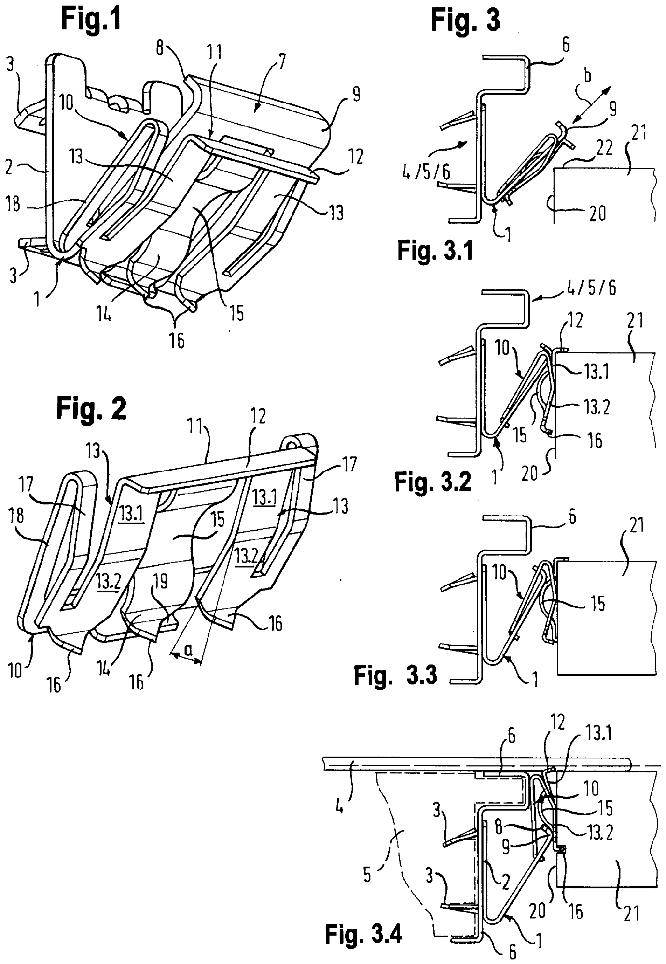

Das in Figur 1 und 2 gezeigte Befestigungselement besteht einerseits aus einer V-förmigen Einbaufeder 1, die an einem vertikalen Schenkel 2 mittels Verbindungslaschen 3 gemäß Figur 3.4 mit einer aus einer Kochfeldplatte 4, z.B. Glaskeramikplatte und einem Kochfeld-Träger 5 bestehenden Kochfeldeinheit 4/5 fest verbunden ist, welche Kochfeld-Einheit 4/5 einen sie umziehenden metallischen Umfangsflansch 6 aufweist. Das frei ragende, schräg geneigte Federteil 7 der Einbaufeder 1 besitzt am Ende einen abgebogenen Ansatz 8 im Anschluss an eine Druckstelle 9 des Federteils 7, die mit ihrer Federkraft mit einem Klemmelement 10 (Figur 2) andererseits zusammenwirkt.

Das Klemmelement 10 besitzt einen Abschlußsteg 11 mit einem abgebogenen Halteansatz 12 und bildet eine Basis für einzeln frei ragende Elementeschenkel 13 mit winkelig (Winkel a in Figur 2) gegenüber geneigten Schenkelstegen 13.1 und 13.2. Zwischen den Elementeschenkeln 13 ist ebenfalls individuell und frei ragend ein Kurvensteg 14 am Abschlußsteg 11 einstückig angeformt, der eine etwa halbrundförmige Rastkurve 15 aufweist. Die freien Enden der Elementeschenkel 13 und des Kurvensteges 14 besitzen Klemmorgane 16 in Form von spitz auslaufenden Krallen.

In einstückiger Verbindung mit den Elementeschenkeln 13 stehen ebenfalls um den Winkel a gebogene Stege 17, die zusammen mit einem Führungsbügel 18 eine U-Form bilden, durch welche das Klemmelement 10 auf das freie Ende bei dem Ansatz 8 des Federteils 7 der Einbaufeder 1 aufgeschoben werden kann und damit mit der Einbaufeder 1 eine im wesentlichen einstückig montierbare Baueinheit darstellt, so wie dies Figur 1 zeigt.

Die Einbaufeder 1 ist entsprechend der Verschiebebahn b) in Figur 3.1 gegenüber dem Klemmelement 10 verschiebbar, während das Klemmelement 10 gegenüber dem Federteil 7 schwenkbar ist wie anhand der Figur 3 noch erläutert. Die Verschiebbarkeit ist anschlagbegrenzt, in dem in der maximal verschobenen Endstellung gemäß Figur 3.4 ein frei geschnittener Begrenzungssteg 19 des Führungsbügels 18 (Fig. 2) an dem Ansatz 8 der Einbaufeder 1 anschlägt und eine weitere Verschiebebewegung und ein Herausgleiten und Trennen des Federteils 7 aus dem Klemmelement 10 verhindert.

Anhand der Figuren 3.1 bis 3.4 ist schrittweise das Einfügen des Einbauelements 4/5/6, also die Kochfeld-Einheit, in den Ausschnitt 20 einer z.B. aus Holz bestehenden Arbeitsplatte 21 (stationäres Einbauelement) gezeigt.

In Figur 3.1 wird das Einbauelement 4/5/6 auf den z.B. rechteckig frei geschnittenen Ausschnitt 20 der Arbeitsplatte 21 abgesenkt, bis gemäß Figur 3.2 der Halteansatz 12 auf die Begrenzungskante 22 zu liegen kommt und durch die Kraft der Einbaufeder 1 die Schenkelstege 13.1 des Klemmelements 10 durch die Druckstelle 9 der Einbaufeder 1 federnd gegen die Ausschnittkante 20 der Arbeitsplatte 21 gedrückt wird und damit das Klemmelement 10 festgehalten wird. Dabei sind die anderen Schenkelstege 13.2 mit den Klemmorganen 16 von der Kante 20 noch leicht abgehoben. Beim weiteren Absenken des Einbauelements 4/5/6 und damit auch der damit verbundenen Einbaufeder 1 in die Stellung gemäß Figur 3.3 erfolgt eine Relativ-Verschiebung der Teile 1 und 10 entlang der nunmehr steileren Verschiebebahn b, wobei die Druckstelle 9 gleichzeitig als Gleitansatz 9 auf die nach oben gerichtete runde Wölbung der Rastkurve 15 des Klemmelements 10 aufläuft und vorzugsweise zuerst auf den Kurvensteg 14 eine Druckkraft ausgeübt wird und seine Klemmorgane 16 schon in Kontakt treten mit der Ausschnittkante 20. Schließlich gerät der Gleitansatz 9 über die Kuppe der Rastkurve 15 auf die nach unten gerichtete Wölbung und erfährt hier eine nach unten gerichtete Kraft auf der schiefen Ebene, wodurch das Einbauelement 4/5/6 mit der Einbaufeder 1 in die korrekte Endstellung gemäß Figur 3.4 gedrückt wird und alle Klemmorgane 16 durch die Federkraft der komprimierten Einbaufeder 10 in der Ausschnittkante 20 verklemmt werden, da nunmehr die Federdruckstelle 9 sich auf den unteren Schenkelstegen 13.2 abstützt. Eine Demontage des Einbauelements 4/5/6 vom stationären Einbauelement, also von der Arbeitsplatte 21, erfolgt in umgekehrter Reihenfolge, letztendlich unterstützt durch die nunmehr nach oben wirkende Kraft auf der schiefen Ebene an der Rastkurve 15.

Im Falle eines ungewollten Lösens z.B. des Kochfeld-Trägers 5 von der Kochfeldplatte 4 - bei nicht vorhandenem gemeinsamen Umfang-Flansch 6 - wird ein tiefes Absacken des Trägers 5 dadurch verhindert, dass der Begrenzungssteg 19 des Klemmelements 10 auf den abgebogenen Ansatz 8 der Einbaufeder (Figur 1 und 3.4) aufläuft und gehalten wird.

## Patentansprüche

1. Befestigungselement (1, 10) für den Einbau eines Kochfeldes (4, 5, 6) in eine Arbeitsplatte (21), welches Befestigungselement an einem durch das Kochfeld (4, 5, 6) oder die Arbeitsplatte (21) bereitgestellten Einbauelement (4, 5, 6, 21) eine dort befestigte Einbaufeder (1) besitzt, die sich beim Zusammenfügen der Einbauelemente am jeweils anderen Einbauelement (4, 5, 6, 21) federnd verklemmt, wobei das Befestigungselement (1, 10) ein verschiebbares zweischenkeliges Klemmelement (10) mit Elementeschenkel (13) aufweist, wobei das zweischenkelige Klemmelement (10) an der Einbaufeder (1) anschlagbegrenzt verschiebbar und um eine virtuelle Schwenkachse schwenkbar geführt ist, welches Klemmelement (10) an einem von zwei Schenkelstegen (13.1) eines Elementeschenkels (13) einen an dem jeweils anderen Einbauelement (21) arretierbaren Halteansatz (12) und am anderen Schenkelsteg (13.2) Klemmorgane (16) besitzt, **dadurch gekennzeichnet, dass** beim Zusammenfügen der Einbauelemente eine Druckstelle (9) der Einbaufeder (1) vom erstgenannten Schenkelsteg (13.1) zum zweitgenannten Schenkelsteg (13.2) des Klemmelements (10) verschiebbar ist und wobei das Klemmelement (10) eine die Schwenkachse darstellenden, mit einem Gleitansatz (9) der Einbaufeder (1) gleitend zusammenwirkende Rastkurve (15) aufweist, mit der der Gleitansatz (9) mit einer Hubbewegung gegenüber einer Verschiebebahn (b) über die Rastkurve (15) von dem einen zum anderen Schenkelsteg (13.1, 13.2) mit einander entgegengesetzten Kräften auf schiefen Ebenen verschiebbar ist.

2. Befestigungselement nach einem der vorhergehenden Ansprüche, **dadurch gekennzeichnet, dass** die Schenkelstege (13.1, 13.2) des einstückigen Klemmelements (10) durch einzelne frei ragende Elementeschenkel (13) gebildet sind.

3. Befestigungselement nach Anspruch 2, **dadurch gekennzeichnet, dass** sich zwischen den Elementeschenkeln (13) ein die Rastkurve (15) aufweisender Kurvensteg (14) befindet.

4. Befestigungselement nach Anspruch 3, **dadurch gekennzeichnet, dass** die Elementeschenkel (13) und der Kurvensteg (14) oder nur der mittlere Kurvensteg (14) Klemmorgane (16) aufweist.

5. Befestigungselement nach einem der vorhergehenden Ansprüche, **dadurch gekennzeichnet, dass** die Schenkelstege (13.1, 13.2) winkelig gegeneinander geneigt sind.

6. Befestigungselement nach einem der vorhergehenden Ansprüche, **dadurch gekennzeichnet, dass** das Klemmelement (10) an einem mit dem oder den Elementeschenkeln (13) und/oder mit dem Kurvensteg (14) verbundenen Abschlußsteg (23) den Halteansatz (12) für dessen Halterung an einer Begrenzungskante (22) des jeweiligen Einbauelements (21) aufweist.

7. Befestigungselement nach einem der vorhergehenden Ansprüche, **dadurch gekennzeichnet, dass** das Klemmelement (10) einen die Einbaufeder (1) in der Verschieberichtung (b) U-förmig umgreifenden Führungsbügel (18) aufweist.

8. Befestigungselement nach Anspruch 7, **dadurch gekennzeichnet, dass** die Einbaufeder (1) einen entgegen der Verschieberichtung (b) abgebogenen Ansatz (8) besitzt, der als Anschlag für den Führungsbügel (18) des Klemmelementes (10) dienen kann.

9. Befestigungselement nach einem der vorhergehenden Ansprüche, **dadurch gekennzeichnet, dass** die Klemmorgane (16) in Form von Krallen vorliegen.

## Claims

1. Fixing element (1, 10) for the installation of a hotplate (4, 5, 6) in a work surface (21), said fixing element having a mounting spring (1) fixed there on a mounting element (4, 5, 6, 21) provided by the hotplate (4, 5, 6) or the work surface (21), said mounting spring (1) being resiliently clamped during assembly of the mounting elements on the respective other mounting element (4, 5, 6, 21), wherein the fixing element (1, 10) has a displaceable double-arm clamping element (10) with an element arm (13), wherein the double-arm clamping element (10) is displaceable, limited by a stop, on the mounting spring (2) and is pivotably guided about a virtual pivot axis, which clamping element (10) possesses, on one of two arm webs (13.1) of an element arm (13), a retaining stop (12) which is lockable on the respective other mounting element (21) and clamping members (16) on the other arm web (13.2), **characterised in that** during assembly of the mounting elements a pressure point (9) of the mounting spring (1) can be displaced from the first-mentioned arm web (13.1) to the second-mentioned arm web (13.2) of the clamping element (10) and wherein the clamping element (10) has a detent curve (15) representing the pivot axis and slidingly interacting with a sliding stop (9) of the mounting spring (1), with which detent curve (15) the sliding stop (9) can be displaced with a lifting movement in relation to a displacement path (b) over the detent curve (15) from the one to the other arm web (13.1, 13.2) with opposing forces on inclined planes.

2. Fixing element according to one of the preceding claims, **characterised in that** the arm webs (13.1, 13.2) of the one-piece clamping element (10) are formed by individual freely projecting element arms (13).

3. Fixing element according to claim 2, **characterised in that** a curved web (14) comprising the detent curve (15) is located between the element arms (13).

4. Fixing element according to claim 3, **characterised in that** the element arm (13) and the curved web (14) or only the centre curved web (14) has clamping members (16).

5. Fixing element according to one of the preceding claims, **characterised in that** the arm webs (13.1, 13.2) are inclined at an angle to each other.

6. Fixing element according to one of the preceding claims, **characterised in that** the clamping element (10), at an end web (23) connected to the one or more element arms (13) and/or to the curved web (14) has the retaining stop (12) for its retention on a boundary edge (22) of the respective mounting element (21).

7. Fixing element according to one of the preceding claims, **characterised in that** the clamping element (10) has a guide bracket (18) which in a U-shape embraces the mounting spring (1) in the displacement direction (b).

8. Fixing element according to claim 7, **characterised in that** the mounting spring (1) has a stop (8) bent counter to the displacement direction (b), which can serve as a stop for the guide bracket (18) of the clamping element (10).

9. Fixing element according to one of the preceding claims, **characterised in that** the clamping elements (16) are present in the form of claws.

## Revendications

1. Elément de fixation (1, 10) pour l'intégration d'une plaque de cuisson (4, 5, 6) dans un plan de travail (21), lequel élément de fixation possède au niveau d'un élément d'intégration (4, 5, 6, 21) mis à disposition par le biais de la plaque de cuisson (4, 5, 6) ou du plan de travail (21) un ressort d'intégration (1) qui y est fixé, lequel ressort d'intégration est serré de manière élastique lors de l'assemblage des éléments d'intégration respectivement au niveau de l'autre élément (4, 5, 6, 21), dans lequel l'élément de fixation (1, 10) présente un élément de serrage à deux branches déplaçable (10) comportant des branches d'élément (13), dans lequel l'élément de serrage à deux branches (10) est déplaçable de manière délimitée par une butée au niveau du ressort d'intégration (1) et est guidé de manière pivotante autour d'un axe de pivotement virtuel, lequel élément de serrage (10) possède au niveau d'un de deux segments de branche (13.1) d'une branche d'élément (13) un épaulement de retenue (12) blocable respectivement au niveau de l'autre élément d'intégration (21) et des organes de serrage (16) au niveau de l'autre segment de branche (13.2), **caractérisé en ce que**
lors de l'assemblage des éléments d'intégration un point de pression (9) du ressort d'intégration (1) est déplaçable depuis ledit premier segment de branche (13.1) vers ledit second segment de branche (13.2) de l'élément de serrage (10) et dans lequel l'élément de serrage (10) présente une courbure d'encliquetage (15) représentant l'axe de pivotement et coopérant par glissement avec un épaulement de glissement (9) du ressort d'intégration (1), courbure d'encliquetage avec laquelle l'épaulement de glissement (9) est déplaçable sur des plans obliques avec un mouvement de levage par rapport à une piste de déplacement (b) par l'intermédiaire d'une courbure d'encliquetage (15) depuis l'un segment de branche vers l'autre segment de branche (13.1, 13.2) avec des forces opposées entre elles.

2. Elément de fixation selon l'une des revendications précédentes, **caractérisé en ce que** les segments de branche (13.1, 13.2) de l'élément de serrage d'un seul tenant (10) sont formés par le biais de branches d'élément individuelles (13) faisant saillie librement.

3. Elément de fixation selon la revendication 2, **caractérisé en ce que,** entre les branches d'élément (13), se trouve un segment de courbure (14) présentant la courbure d'encliquetage (15).

4. Elément de fixation selon la revendication 3, **caractérisé en ce que** les branches d'élément (13) et le segment de courbure (14) ou seulement le segment de courbure central (14) présentent des organes de serrage (16).

5. Elément de fixation selon l'une des revendications précédentes, **caractérisé en ce que** les segments de branche (13.1, 13.2) sont inclinés l'un par rapport à l'autre de manière angulaire.

6. Elément de fixation selon l'une des revendications précédentes, **caractérisé en ce que** l'élément de serrage (10) présente au niveau d'un segment de terminaison (23) relié à la ou aux branches d'élément (13) et/ou au segment de courbure (14) l'épaulement de retenue (12) pour la retenue de celui-ci au niveau d'un bord de délimitation (22) de l'élément d'intégration (21) respectif.

7. Elément de fixation selon l'une des revendications précédentes, **caractérisé en ce que** l'élément de serrage (10) présente un support de guidage (18) enserrant en forme de U le ressort d'intégration (1) dans la direction de déplacement (b).

8. Elément de fixation selon la revendication 7, **caractérisé en ce que** le ressort d'intégration (1) possède un épaulement (8) recourbé dans la direction inverse de la direction de déplacement (b) qui peut servir de butée pour le support de guidage (18) de l'élément de serrage (10).

9. Elément de fixation selon l'une des revendications précédentes, **caractérisé en ce que** les organes de serrage (16) se présentent sous la forme de griffes.
